Europäisches Patentamt

European Patent Office

Office européen des brevets

(11) Veröffentlichungsnummer: **0 162 948**
**B1**

(12) **EUROPÄISCHE PATENTSCHRIFT**

(45) Veröffentlichungstag der Patentschrift: **13.06.90**

(21) Anmeldenummer: **84110106.6**

(22) Anmeldetag: **24.08.84**

(51) Int. Cl.⁵: **B 29 C 69/00** // B29K21:00, B29L7:00

(54) **Verfahren zur Herstellung einer wenigstens zwei Schichten enthaltenden, profilierten Platte.**

(30) Priorität: **01.06.84 DE 3420381**

(43) Veröffentlichungstag der Anmeldung:
**04.12.85 Patentblatt 85/49**

(45) Bekanntmachung des Hinweises auf die
Patenterteilung:
**13.06.90 Patentblatt 90/24**

(84) Benannte Vertragsstaaten:
**AT BE CH DE FR GB IT LI LU NL SE**

(56) Entgegenhaltungen:
**CH-A- 356 274**
**DE-A-2 103 262**
**DE-B-1 018 209**
**FR-A-1 498 133**
**FR-E- 83 515**
**US-A-2 915 785**

(73) Patentinhaber: **Firma Carl Freudenberg**
**Höhnerweg 2-4**
**D-6940 Weinheim/Bergstrasse (DE)**

(72) Erfinder: **Feyerabend, Ulrich**
**Akazienweg 26**
**D-6940 Weinheim (DE)**
Erfinder: **Graab, Gerhard, Dr.**
**Rüsselsheimer Strasse 5**
**D-6800 Mannheim (DE)**

Courier Press, Leamington Spa, England.

## Beschreibung

Die Erfindung betrifft ein Verfahren zur Herstellung einer wenigstens zwei Schichten enthaltenden, profilierten Platte, bei dem eine dünne Oberschicht aus dehnbarem Material mit einer unvulkanisierten Unterschicht aus Gummi hinterlegt und unter Bildung von Vorsprüngen mit einer Gegenseite verpreßt wird, die musterartig verteilte Aussparungen einer die Dicke der Oberschicht übertreffenden Tiefe aufweist, bei dem die beiden Schichten durch Vulkanisation verbunden und verfestigt werden und bei dem wenigstens die Oberschicht im Bereich der Vorsprünge durch einen geradlinig geführten Schneide-, Fräs- oder Schleifvorgang entfernt wird.

Ein solches Verfahren wird in der DE-OS 21 03 262 beschrieben. Es führt zu einer ebenen Ausbildung der Stirnflächen der Vorsprünge, was bei bestimmten Anwendungen der platte als nachteilig empfunden wird. Wird eine solche platte beispielsweise als Bodenbelag verwendet, dann kann es beim normalen Gebrauch im Bereich der Stirnflächen der Vorsprünge zu schwierig zu entfernenden Schmutzablagerungen kommen, was sowohl in hygienischer als auch in ästhetischer Hinsicht wenig befriedigend ist.

Auch eine Verwendung solcher platten zur Herstellung von Laufsohlen im Schuhwerk ist an sich denkbar. Die ebene Ausbildung der Stirnflächen bedingt dabei indessen einen unelastischen Auftritt, was in orthopädischer Hinsicht wenig befriedigend ist.

Der Erfindung liegt die Aufgabe zugrunde, das eingangs beschriebene Verfahren derart weiter zu entwickeln, daß bei einer ähnlichen einfachen Verfahrensführung kuppelartig gewölbte Stirnflächen der Vorsprünge erhalten werden.

Zur Lösung dieser Augabe wird erfindungsgemäß ein Verfahren der eingangs genannten Art vorgeschlagen, das dadurch gekennzeichnet ist, daß die Platte während der Entfernung der Oberschicht im Bereich der Vorsprünge einer sich senkrecht zu ihrer Erstreckung einwirkenden Pressung und Verformung so ausgesetzt wird, daß kuppelartig gewölbte Stirnflächen der Vorsprünge erhalten werden. Überraschenderweise ergibt sich in diesem Falle trotz der Anwendung eines geradlinig geführten Schnittes ein größerer Materialabtrag im Bereich der Peripherie der Vorsprünge als im mittleren Bereich. Die unterschiedlichen Zonen gehen dabei gleichmäßig ineinander über, wodurch die Stirnflächen des fertiggestellten Produktes kuppelförmig ausgewölbt sind.

Die Pressung kann zwischen zwei Werkzeugen vorgenommen werden, die sich parallel zueinander erstreckende Preßflächen aus unnachgiebigem Material haben. Diese Bedingung ist im einfachsten Falle bereits hinreichend durch die Verwendung von Zylinderwalzen oder ebene Preßplatten erfüllbar, somit von Werkzeugen, die der Reliefstruktur der zu bearbeitenden Platte nicht speziell angepaßt sind. Herstellung und Verwendung sind dementsprechend unproblematisch.

Der Wölbungsgrad der Stirnflächen der Erhebungen ist maßgeblich abhängig von dem Verformungsgrad, dem die Vorsprünge während der Entfernung mindestens der Oberschicht im Bereich der Vorsprünge ausgesetzt sind. Eine stärkere Verpressung der Vorsprünge hat demzufolge auch eine stärker ausgeprägte Durchwölbung der Stirnflächen zur Folge. Dabei ist indessen zu berücksichtigen, daß hohe Verformungsgrade eine erhebliche mechanische Belastung des eingesetzten Plattenmaterials bedingen und deshalb nicht ohne weiteres angewendet werden können. Der Erzielung ausgeprägter Kuppelstrukturen unter Verwendung ebenflächiger Werkzeuge sind hierdurch Grenzen gesetzt.

Um dennoch in kritischen Fällen zu einer ausgeprägten Kuppelstruktur zu gelangen, wird es demzufolge nach einer vorteilhaften Ausgestaltung vorgeschlagen, die Pressung zwischen Werkzeugen vorzunehmen, von denen wenigstens das eine sich mit der Peripherie der Vorsprünge deckende, wulstartige Erhebungen auf der Preßfläche aufweist, die gleichmäßig in die übrige Preßfläche übergehen. Die während der Entfernung der Oberschicht auf die Vorsprünge ausgeübte Pressung und Verformung ist als Folge hiervon im Bereich der Peripherie der Vorsprünge größer als im zentralen Bereich. Das Material vermag hier leicht in die benachbarten Freiräume auszuweichen und wahrscheinlich dadurch der relativ vergrößerten Pressung und Verformung besser zu widerstehen als im zentralen Bereich.

Die Grundrißgestalt und gegenseitige Zuordnung der Vorsprünge ist an sich beliebig. Eine besonders ausgeprägte Kuppelbildung findet indessen statt, wenn die Vorsprünge einen gegenseitigen Abstand haben sowie eine kreisförmig begrenzte Grundfläche.

Die Pressung der Platte kann zwischen zwei Werkzeugen vorgenommen werden, von denen wenigstens das eine aus einem elastisch nachgiebigen Material besteht. Der Verformungsgrad der Vorsprünge, auf den es während der Entfernung wenigstens der Oberschicht maßgeblich ankommt, läßt sich hierdurch weiter steigern und damit auch der Wölbungsgrad der erhaltenen Stirnflächen.

Im vorstehenden Sinne ist es möglich, die elastische Nachgiebigkeit der zur Anwendung gelangenden Pressenwerkzeuge beliebig zu variieren. Zweckmäßigerweise ist indessen stets eines der beiden Werkzeuge härter ausgebildet als das andere, um die Platte während des Abtrennens der Oberschicht im Bereich der Vorsprünge in einer definierten Lage zu halten und auf diese Weise von der Norm abweichende Unegalitäten zu vermeiden.

Die im Bereich der Vorsprünge abgetrennte Oberschicht kann aus einem nahezu beliebigen, dehnbaren Werkstoff bestehen, der durch Vulkanisation oder Klebung fest mit dem die Unterschicht bildenden Gummimaterial verbindbar ist. Die Oberschicht kann von dem Material der Unterschicht abweichend eingefärbt sein, was es erlaubt, ästhetisch ansprechende Effekte zu erzielen. Sie kann desweiteren aus einem schmutzabweisenden Material bestehen, um die Entfernung von Verschmutzungen zu erleichtern. Dabei ist es ein besonderer Vorteil, daß besondere Werte auf eine große Verschleißempfindlichkeit nicht gelegt werden muß insofern, als die Oberschicht selbst im Bereich der Vorsprünge von den im wesentlichen aus Material der Unterschicht bestehenden Wölbungen der Stirnflächen überragt wird. Die Oberschicht ist dadurch dem Verschleiß als solchem kaum im nennenswerten Maße ausgesetzt.

Beispiel 1

Die nachfolgend angegebenen Bestandteile werden in einem Gummikneter intensiv vermischt und unter Verwendung eines Walzwerkes zu unterschiedlich dicken Schichten ausgezogen. Die die Unterschicht bildende Schicht hat eine Dicke von ca. 2 bis 6 mm, die die Oberschicht bildende Schicht eine solche von ca. 0,5 bis 1,5 mm.

Die Grundzusammensetzung beider Schichten umfaßt 100 Gew. Teile Styrol-Butadien-Kautschuk, 5 Gew.-Teile Zinkoxid, 1 Gew.-Teil Stearinsäure, 40 Gew.-Teile aktive Kieselsäure, 60 Gew.-Teile Kieselkreide, 2,5 Gew.-Teile Triäthanolamin, 1 Gew.-Teil Paraffin, 2,3 Gew.-Teile Schwefel, 1,2 Gew.-Teile Benzothiazyl-2-cyclohexylsulfenamid (CBS) und 1 Gew.-Teil eines Alterungsschutzmittels, z.B. auf der Basis von sterisch gehindertem Bisphenol. Zusätzlich enthält das für die Herstellung der dünneren Oberschicht verwendete Material 5 Gew.-Teile Eisenoxid rot und 2 Gew.-Teile Eisenoxid gelb. Das Material weist dadurch eine braune Farbe auf. Das für die Herstellung der dickeren Unterschicht verwendete Material enthält zusätzlich zu der angegebenen Grundmischung 7 Gew.-Teile Ruß und weist hierdurch eine schwarze Farbe auf.

Die beiden Schichten werden nach ihrer Bildung kontinuierlich in eine Vulkanisiermaschine überführt und vorvulkanisiert, wobei die dünnere Schicht gegen den auf 160°C erwärmten Zylinder der Vulkanisiermaschine läuft. Die Geschwindigkeit beträgt 60m/Stunde. Hierbei werden beide Schichten vereinigt. Gleichzeitig wird der dem beheizten Zylinder zugewandte Teil der Bahn so vorvulkanisiert, daß beim anschließenden Fertigvulkanisieren in einer Presse, in der zugleich die Erhebungen (Pastillen) ausgebildet werden, eine gegenseitige Vermischung der Materialien der unterschiedlich eingefärbten Schichten an der Grenzschicht mehr stattfindet. Dennoch wird eine feste und homogene Verbindung zwischen der dickeren und der dünneren der beiden Schichten erzielt.

Die Pastillen sind auf einem quadratischen Grundraster angeordnet. Dieses hat eine Kantenlänge von 35mm. Der Durchmesser der sich kegelig über die Oberseite der Oberschicht erhebenden Pastillen beträgt an der kleinsten Stelle 27mm, die Höhe 2mm. Zwischen den Pastillen befinden sich somit Freiräume, in die das Material während der senkrechten Verpressung ausweichen kann.

Die solcherart verfestigte und die Oberschicht reliefartig überragende Pastillen aufweisende Platte wird anschließend in eine Spaltanlage überführt. Diese umfaßt zwei die Platte in einem Walzenspalt verpressende Zylinderrollen und ein Bandmesser, das parallel zu den Achsen der Zylinderrollen durch den Walzenspalt hindurchgeführt ist. Die Linienpressung, mit der die Rollen auf den einander gegenüberliegenden Seiten der Platte aufliegen, beträgt 5000 N bei einer Plattenbreite von 1020mm. Sie bewirkt während des Hindurchführens der Platte und der dabei vorgenommenen Abspaltung der Oberschicht von den Erhebungen eine elastische Verformung der Pastillen. Diese weisen dadurch nach dem Verlassen des Walzenspaltes eine kuppelartige Wölbung im Bereich der Stirnfläche auf. Diese erleichtern die Reinigung außerordentlich, wenn die Platte während ihrer späteren Verwendung als Bodenbelag benutzt wird.

Beispiel 2

Unter Anwendung eines Herstellungsverfahrens, das den in Beispiel 1 geschilderten Bedingungen entspricht, werden zunächst zwei verschieden dicke Schichten erzeugt, von denen die die Oberschicht bildende Schicht eine Dicke von 0,5 bis 1,5mm aufweist und die die Unterschicht bildende Schicht eine Dicke von ca. 2 bis 5mm. Für die Herstellung beider Schichten wird eine übereinstimmende Grundmischung verwendet, umfassend 100 Gew.-Teile Kautschuk, bestehend jeweils zu einem Drittel aus ölverstrecktem Sytrol-Butadien-Kautschuk, Butadien-Kautschuk und Styrol-Butadien-Blockpolymer, 50 Gew.-Teile Kieselsäure, 3 Gew.-Teile Zinkoxid, 2 Gew.-Teile Stearinsäure, 2 Gew.-Teile Schwefel, 2 Gew.-Teile Aktivator und 0,3 Ultrabeschleuniger Dithiocarbamat.

Zusätzlich werden in die für die Herstellung zur Oberschicht bestimmte Zusammensetzung 6 Gew.-Teile Titanweiß eingemischt, in die für die Herstellung der Unterschicht bestimmte Zusammensetzung 5 Gew.-Teile Ruß. Die Oberschicht weist dadurch eine weiße Einfärbung auf, die Unterschicht eine schwarze Einfärbung.

Beide Schichten werden aufeinandergelegt und unter den in Beispiel 1 genannten Bedingungen in aufeinanderfolgenden Stufen vor- und fertigvulkanisiert. Auch in diesem Falle schließt der Fertigvulkanisationsvorgang die Ausbildung der die Oberseite reliefartig überragenden Pastillen ein. Diese sind jedoch auf einem quadratischen Grundraster mit einer Kantenlänge von 16mm angeordnet und haben bei einer kegelstumpfförmigen Gestalt einen kleinsten Durchmesser von 10mm. Das Abspalten der Oberschicht im Bereich der Pastillen erfolgt unter den in Beispiel 1 genannten Bedingungen. Auch in diesem Falle wird somit eine verformende Pressung während des Spaltvorganges auf die Pastillen ausgeübt. Sie führt zur Ausbildung kuppelartig gewölbter Stirnflächen der fertiggestellten Pastillen. Eine Verwendung des erhaltenen Materials als Laufsohle für Schuhwerk wird hierdurch begünstigt.

## Patentansprüche

1. Verfahren zur Herstellung einer wenigstens zwei Schichten enthaltenden, profilierten Platte, bei dem eine dünne Oberschicht aus dehnbarem Material mit einer unvulkanisierten Unterschicht aus Gummi hinterlegt und unter Bildung von Vorsprüngen mit einer Gegenplatte verpreßt wird, die musterartig verteilte Aussparungen einer die Dicke der Oberschicht übertreffenden Tiefe aufweist, bei dem die beiden Schichten durch Vulkanisation verbunden und verfestigt werden und bei dem wenigstens die Oberschicht im Bereich der Vorsprünge durch einen geradlinig geführten Schneide-, Fräs- oder Schleifvorgang entfernt wird, dadurch gekennzeichnet, daß die Platte während der Entfernung der Oberschicht im Bereich der Vorsprünge einer senkrecht zu ihrer Erstreckung einwirkenden Pressung und Verformung so ausgesetzt wird, daß kuppelartig gewölbte Stirnflächen der Vorsprünge erhalten werden.

2. Verfahren nach Anspruch 1, dadurch gekennzeichnet, daß die Pressung zwischen zwei Werkzeugen vorgenommen wird, die sich parallel zueinander erstreckende Preßflächen haben.

3. Verfahren nach Anspruch 1, dadurch gekennzeichnet, daß die Pressung zwischen zwei Werkzeugen vorgenommen wird, von denen wenigstens das eine sich mit der Peripherie der Vorsprünge deckende, wulstartige Erhebungen auf der Preßfläche aufweist und daß die Erhebungen gleichmäßig in die übrige Preßfläche übergehen.

4. Verfahren nach Anspruch 1 bis 3, dadurch gekennzeichnet, daß die Pressung zwischen zwei Walzen mit sich parallel zueinander erstreckenden Achsen vorgenommen wird.

5. Verfahren nach Anspruch 1 bis 4, dadurch gekennzeichnet, daß die Pressung zwischen einem Werkzeug aus unnachgiebigem Material und einem Werkzeug aus elastisch nachgiebigem Material vorgenommen wird.

6. Verfahren nach Anspruch 1 bis 4, dadurch gekennzeichnet, daß die Pressung zwischen zwei Werkzeugen aus elastisch nachgiebigem Material vorgenommen wird.

7. Verfahren nach Anspruch 6, dadurch gekennzeichnet, daß die Pressung zwischen zwei Werkzeugen aus elastisch nachgiebigem Material vorgenommen wird und daß die elastische Nachgiebigkeit der beiden Materialien unterschiedlich ist.

## Revendications

1. Procédé pour la fabrication d'une plaque profilée comprenant au moins deux couches, dans lequel une couche supérieure mince en matériau extensible est appliquée sur une couche en caoutchouc non vulcanisée et est comprimée avec formation de saillies par une contreplaque qui présente des cavités réparties suivant un dessin et dont la profondeur dépasse l'épaisseur de la couche supérieure, dans lequel les deux couches sont assemblées et durcies par vulcanisation et dans lequel au moins la couche supérieure est enlevée dans la zone des saillies par une opération de découpage, de fraisage ou de meulage effectuée en ligne droite, caractérisé en ce que la plaque est exposée à une compression et à une déformation agissant perpendiculairement à son orientation pendant l'enlèvement de la couche supérieure dans la zone des saillies, de façon à obtenir des saillies présentant des surfaces frontales incurvées en forme de coupole.

2. Procédé selon la revendication 1, caractérisé en ce que la compression est réalisée entre deux outils qui ont des surfaces de compression s'étendant parallèlement l'une à l'autre.

3. Procédé selon la revendication 1, caractérisé en ce que la compression est réalisée entre deux outils dont l'un au moins présente, sur la surface de compression, des sur élévations en forme de bourrelets recouvrant la périphérie des saillies et en ce que les surélévations se continuent progressivement à la surface de compression ordinaire.

4. Procédé selon les revendications 1 à 3, caractérisé en ce que la compression est réalisée entre deux cylindres dont les axes sont parallèles l'un à l'autre.

5. Procédé selon les revendications 1 à 4, caractérisé en ce que la compression est réalisée entre un outil en matériau non élastique et un outil en matériau élastique.

6. Procédé selon les revendications 1 à 4, caractérisé en ce que la compression est réalisée entre deux outils en matériau élastique.

7. Procédé selon la revendication 6, caractérisé en ce que la compression est effectuée entre deux outils en matériau élastique et en ce que les deux matériaux présentent des flexibilités élastiques différentes.

## Claims

1. A process for producing a profiled sheet containing at least two layers, in which a thin upper layer made of elastic material is backed by an uncured lower layer made of rubber and is pressed onto a countersheet with formation of projections, which counter-sheet has recesses distributed like a pattern having a depth which exceeds the thickness of the upper layer, in which the two layers are joined and compacted by vulcanisation, and in which at least the upper layer is removed in the region of the projections by means of a cutting, milling or grinding operation conducted in a straight line, characterized in that, during the removal of the upper layer in the region of the projections, the sheet is subjected to pressing and deformation perpendicular to its extension in such a way that end faces of the projections are obtained which are curved like a dome.

2. A process according to claim 1, characterized in that the pressing is effected between two tools which have pressing surfaces which extend parallel to each other.

3. A process according to claim 1, characterized in that the pressing is effected between two tools, at least one of which has bulging elevations on the pressing surface matching the periphery of the projections, and in that the elevations blend evenly into the remaining pressing surface.

4. A process according to any of claims 1 to 3, characterized in that the pressing is effected between two rollers having axes extending parallel to each other.

5. A process according to any of claims 1 to 4, characterized in that the pressing is effected between one tool made of rigid material and one tool made of resilient elastic material.

6. A process according to any of claims 1 to 4, characterized in that the pressing is effected between two tools made of resilient elastic material.

7. A process according to claim 6, characterized in that the pressing is effected between two tools made of resilient elastic material, and in that the elastic resilience of the two materials is different.